# EUROPEAN PATENT APPLICATION

(11) **EP 0 554 462 A1**
(43) Date of publication of application: **11.08.1993**
(21) Application number: 92918556.9
(22) Date of filing: 26.08.1992
(51) Int. Cl.: G05B 19/18, G05B 19/405

(54) **METHOD FOR DEALING WITH INSTANTANEOUS VOLTAGE DROP OF POWER SUPPLY IN CNC EQUIPMENT, AND APPARATUS THEREFOR**

(30) Priority: 27.08.1991 JP 240471/91
(71) Applicant: FANUC LTD., Minamitsuru-gun, Yamanashi 401-05 (JP)
(72) Inventor: IKEDA, Yoshiaki, Room 6-310, Fanuc Manshonharimomi, Minamitsuru-gun, Yamanashi 401-05 (JP); KOIKE, Takeshi, Fanuc Dai-3 vira-karamatsu, Minamitsuru-gun,Yamanashi 401-05 (JP); AKASHI, Seiji, Room 11-401, Fanuc Manshonharimomi, Minamitsuru-gun, Yamanashi 401-05 (JP)
(74) Representative: Billington, Lawrence Emlyn
(86) International application number: JP9201080
(87) International publication number: WO9304415

(57) **Abstract**

A method and apparatus for dealing with an instantaneous voltage drop of the power supply in a CNC equipment, by which any input unit for switching on/off the external power supply can be dispensed with and the button operation is simple. In a CNC equipment (3), provided are a power supply circuit (31) which is connected to an external power supply (1) and forms a DC power supply used in the CNC equipment (3), a voltage monitoring circuit (33) which issues to a CPU in the CNC equipment an interruption instruction for stopping a servo system when it senses the voltage drop of the output of the power supply circuit (31), and a means (32) for generating a reset signal, which outputs a reset signal to the CPU when it receives from the voltage monitoring means (33) the signal representing that the power supply has been restored from the instantaneous voltage drop. Upon the restoration from the voltage drop, the means (32) keeps the CPU (34) in a reset state for a certain time and then releases the reset stage of the CPU (34) to run the system program. Thereafter, by pressing the start button of the CPU (34), a programmed operation can run.

## Description

### Technical Field

The present invention relates to a method and an apparatus for coping with an instantaneous fall, if any, of the supply voltage during the operation of a number of CNC devices (computerized numerical control devices) in the case where a plurality of CNC devices are set in a transfer line or the like.

### Background Art

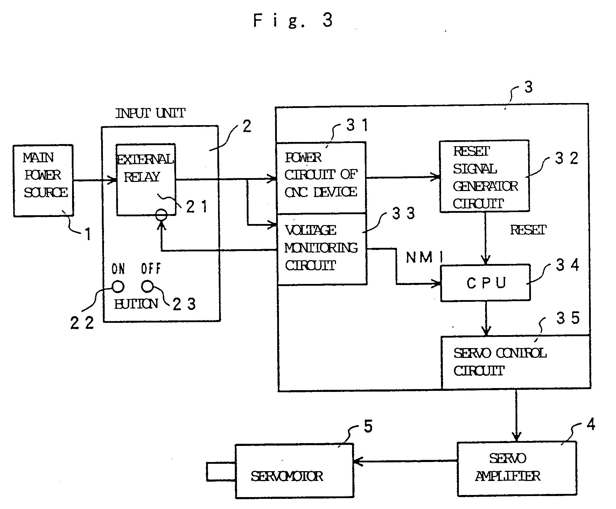

If an instantaneous fall of the supply voltage occurs during the operation of a CNC device, this can cause erroneous operation of a CPU of the CNC device in some cases. Conventionally, in order to cope with this, there is provided an input unit having an external relay circuit for controlling the on-off operation of a power source for the CNC device, for example. When an instantaneous fall of the supply voltage is perceived on the CNC device side in this arrangement, the relay of the input unit is opened to stop the power supply to the CNC device. Referring to the block diagram of Fig. 3, an input unit 2 is located between a main power source 1 and a CNC device 3. Thus, each CNC device 3 requires use of one input unit. This input unit 2 is composed of an external relay 21, an ON button 22, and an OFF button 23.

The above CNC device 3 comprises a power circuit 31 of the CNC device for forming a DC constant-voltage (e.g., DC 5 V or the like) power source on the basis of the main power source 1 (e.g., AC 200 V), a reset signal generator circuit 32 for resetting a CPU 34 when triggered by the activation of the 5-V power source at the start of operation, a voltage monitoring circuit 33 for detecting an instantaneous fall of the supply voltage by monitoring an input of voltage to the CNC device 3 in a manner such that an NMI signal (non-maskable interrupt signal) is given to the CPU 34, and also the off command is given to an off terminal of the external relay 21 of the input unit 2, when the input voltage deviates from a set level range, and a servo control circuit 35 for controlling the drive of a servomotor 5 through a servo amplifier 4 in response to a command from the CPU 34.

In operating the CNC device described above, the main power source 1 and the CNC device 3 are connected through the input unit 2 (external relay 21) by first closing a switch (not shown) of the main power source 1 and then depressing the ON button 22 of the input unit 2. Thereupon, the constant-voltage power source of, e.g., DC 5 V is created, and the voltage from this power source is delivered to the reset signal generator circuit 32. This reset signal generator circuit 32 monitors the leading edge of the voltage applied thereto, and issues a reset signal upon detection of the leading edge. As a result, the CPU is restored to its initial state, and the operation is started when a start button (not shown) is depressed.

If the voltage value of the power source for the CNC device 3 deviates from the set level range for any reason during the operation, the voltage monitoring circuit 33, which is monitoring this voltage value, concludes that an instantaneous fall of the supply voltage has occurred, and delivers the NMI signal to the CPU 34, and simultaneously, delivers the power-off command to the off terminal of the external relay 21 of the input unit 2. Since a certain period of time is required for the activation of the external relay 21 or the like before the power supply to the CNC device is actually cut off following the issue of the power-off command, the CPU 34 can finish a predetermined interrupt operation during that period of time in accordance with the received NMI signal. Then, the CPU 34 runs programs, such as one for suspending the servo system, required in case of an emergency or instantaneous fall of the supply voltage. After this interrupt operation is finished completely, the power supply to the CNC device 3 is cut off by the external relay 21 of the input unit 2, and the delivery of output signals to the CNC device, servo system, and machine is suspended.

To resume the operation after recovery from the instantaneous fall of the supply voltage has been recognized, the ON button of the input unit 2 is depressed. At this time, the switch of the main power source is kept on. Thereafter, the operation is performed in the same sequence as the one described in connection with the start of the operation.

In order to cope with the instantaneous fall of the supply voltage of the CNC device, as described above, conventionally one input unit is provided for each CNC device. In this case, when the first operation, the switch of the main power source is first closed; the ON button of the input unit is then turned on; and subsequently, the start button is depressed to activate the CNC device. Thus, in restarting the operation after the recovery from an instantaneous fall, if any, of the supply voltage, the start button, as well as the ON button of the input unit, has to be depressed. Where a number of CNC devices are included in a transfer line, therefore, a number of input units corresponding to the number of the CNC devices must be provided separately. Furthermore, in starting or restarting the operation, an operator must follow a troublesome procedure, going to the location of each input unit for depressing its ON button and then the start button. Thus, the centralized control of the CNC devices has been difficult when a system includes a number of CNC devices.

### Disclosure of the Invention

Accordingly, the object of the present invention is to provide a method and an apparatus for coping with an instantaneous fall of the supply voltage, requiring no use of the aforesaid input unit so that button operation for the start or restart of operation is made easy.

In order to achieve the above object, a method according to the present invention comprises a step of giving an interrupt command to a CPU of a CNC device to stop the operation of the servo system when an instantaneous fall of the supply voltage is detected, and a step of giving a reset signal to the CPU when the supply voltage is recovered from its instantaneous fall, thereby causing the state as capable of running a program upon depressing a start button. Preferably, the method further comprises a step of issuing a signal indicative of a standby state for operation following the recovery of the supply voltage from the instantaneous fall of the supply voltage. Also, the instantaneous fall of the supply voltage is detected by the output value of a power circuit forming a DC power source used in the CNC device or by the supply voltage applied to the CNC device 3.

Preferably, the reset signal is a signal with a fixed time interval set for the CPU from the point of time when the instantaneous fall of the supply voltage is recovered.

Further, an apparatus according to the present invention comprises a power circuit connected to an external power source to form a DC power source used in a CNC device, a monitoring means adapted to monitor the value of an output from the power source or the value of an input from the external power source to the power circuit to give an interrupt command for stopping a servo system to a CPU of the CNC device when an instantaneous fall of the voltage is detected, and reset signal generating means for delivering a reset signal with a fixed time interval to the CPU on receiving a signal indicative of the recovery from the instantaneous fall of the output value of the power circuit from the monitoring means, all the means being incorporated in the CNC device.

Preferably, the reset signal generating means delivers from the monitoring means the reset signal to the CPU for a predetermined period of time, which is previously set for the CPU after receiving the signal indicative of the recovery from the instantaneous fall of the output value of the power circuit.

Preferably, the CNC device further incorporates signal generating means for indicating a standby state for operation based on the recovery from the instantaneous fall of the supply voltage by issuing a signal adapted to be asserted when the external main power source is turned on, and to be negated by issuing the signal for negation when a start button is depressed to start automatic operation after the recovery from the instantaneous fall of the supply voltage.

As described above, according to the present invention, in contrast with the conventional case, the CPU is reset instead of cutting off the external relay when the instantaneous fall of the supply voltage is perceived. Thus, the input unit for turning on and off the external power source need not be used, so that the apparatus can be made simpler. Besides, the operation can be restarted after the occurrence of the instantaneous fall of the supply voltage by only depressing the start button, and this provides a special effect such that the procedure of operation can generally be made simpler.

### Brief Description of the Drawings

Fig. 1 is a block diagram showing connections between an CNC device and a main power source and a circuit arrangement in the CNC device, used to cope with an instantaneous fall of the supply voltage, according to one embodiment of the present invention,
Fig. 2 is a timing chart used for coping with an instantaneous fall of the supply voltage by means of the arrangement of Fig 1; and
Fig. 3 is a block diagram showing connections between an CNC device and a main power source and a circuit arrangement in the CNC device, used to cope with an instantaneous fall of the supply voltage, according to a prior art example.

### Best Mode of Carrying Out the Invention

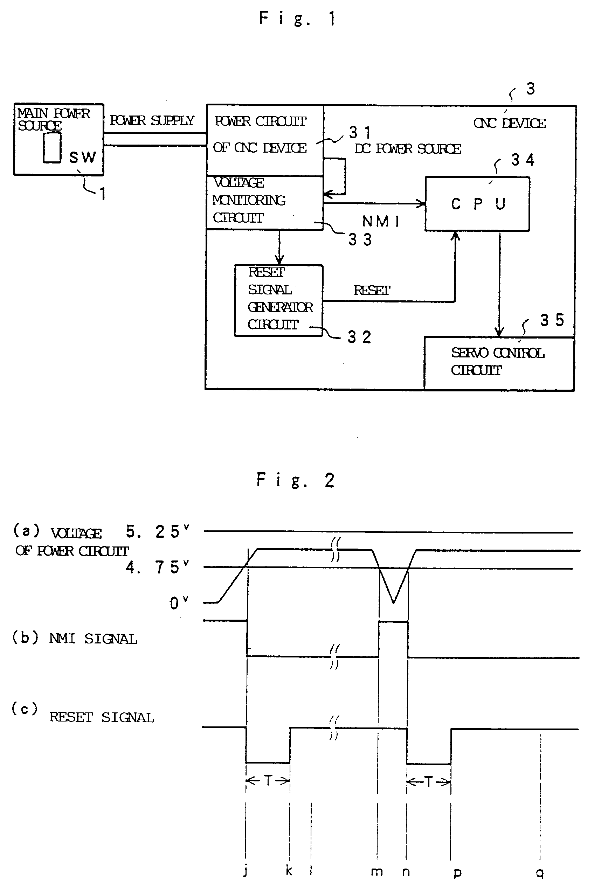

Fig. 1 is a diagram illustrating connections between circuits in a CNC device and a main power source for the CNC device according to the present invention, for coping with an instantaneous fall of the supply voltage, wherein the same components as those described before with reference to Fig. 3 are represented by the same reference numerals.

The CNC device 3 of Fig. 1, like the CNC device shown in Fig. 3, comprises a power circuit 31 for the CNC device 3, a reset signal generator circuit 32, a voltage monitoring circuit 33 for monitoring an instantaneous fall of the supply voltage, a CPU 34, and a servo control circuit. As will be described in detail later, the CNC device 3 differs from prior art examples shown in Fig. 3 mainly in the functions of the reset signal generator circuit 32 and the voltage monitoring circuit 33. Furthermore, as seen from Fig. 1, the CNC device 3 is characterized in that it is connected directly to the main power source 1 without the interposition of any input unit, such as one shown in Fig. 3, between the two.

The following is a description of the CNC device 3 of Fig. 1. The power circuit for the CNC device 3 constitutes a DC power source (e.g., voltage of 5 V) which is used in the CNC device 3. The voltage monitoring circuit 33, which is used to monitor an instantaneous fall of the supply voltage, observes whether or not the output value of the DC power source in the CNC device 3 is deviated from a set range within which it should be presumed to be indicative of an instantaneous fall. If the circuit 33 perceives the deviation, it continues to give an NMI signal to the CPU 34 as long as the deviation is perceived. Also, when the voltage monitoring circuit 33 detects recovery of the instantaneous fall of the supply voltage, it gives an instantaneous supply voltage fall recovery signal to a reset signal generator circuit 32. On receiving the instantaneous supply voltage fall recovery signal, the reset signal generator circuit 32 immediately delivers a one-shot reset signal with a fixed time interval T to the CPU 34, thereby keeping the CPU in a reset state during the interval. When the time interval T terminates, the CPU is automatically released from the preceding reset state, whereupon resetting of the CPU 34 is finished. Thus, a system program starts running at this point of time. When an operator depresses a start button, programmed operation is restarted, and the CPU 34 gives a servo start signal to the servo control circuit 35. As in the case of the prior art example of Fig. 3, moreover, a servo amplifier is connected to the servo control circuit 35, and a servomotor is connected to the servo amplifier, illustration of the servo amplifier and the servomotor being omitted in Fig. 1.

Referring now to the timing chart of Fig. 2, a specific example of the operation of each circuit of the CNC device 3 shown in Fig. 1 will be described. This example represents a case where the power circuit 31 of the CNC device constitutes the DC power source of 5 V, while the operating voltage of the IC ranges from 4.75 to 5.25 V; if this range is overstepped, in this case, normal operation cannot be ensured.

In starting the operation, when a switch SW of the main power source 1 is turned on, the voltage of the CNC power circuit 31 rapidly rises, as shown in Fig. 2(a). At the point (j) where the lower limit of 4.75 V is to be attained, a signal is delivered to the reset signal generator circuit 32. On receiving this signal, the reset signal generator circuit 32 then keeps its reset output terminal at a low level for the predetermined period of time T (see Fig. 2(c)), thereby maintaining the reset state of the CPU during that period. Then, the signal level is automatically switched to a high level so that the CPU is released from the preceding reset state (at time k) during this transition, whereupon resetting of the CPU 34 is finished. At this point of time (k), as mentioned before, the CPU 34 starts running the system program. If the operator depresses the start button (not shown) at any point of time (L) after that, a desired operation program can be started.

When the voltage of the power circuit 31 of the CNC device is reduced to be lower than 4.75 V (at time m) during the operation, the voltage monitoring circuit 31 perceives this instantaneous fall of the supply voltage, and gives the NMI signal to the CPU 34. As shown in Fig. 2(b), this NMI signal continues to be delivered so that the instantaneous fall of the supply voltage is recovered, that is, the lowered voltage becomes not lower than 4.75 V again (at time n). Upon the rise of this NMI signal, the CPU 34 executes a given program, thereby stopping the operation of servo system, delivery of its output signal to a machine, and the operation.

When the instantaneous fall of the supply voltage is recovered (at time n), the voltage monitoring circuit 33 perceives this, and delivers the instantaneous supply voltage fall recovery signal to the reset signal generator circuit 32. Thereupon, the reset signal generator circuit 32 delivers a low-level reset signal for the predetermined period of time T after the recovery from the instantaneous fall of the supply voltage while the CPU 34 is kept in the reset state as mentioned before; the signal is automatically switched from the low level to the high level (at time p) after the passage of the period of time T; then, the CPU 34, having so far been kept in the reset state during that time, is released from the reset state, whereupon resetting the CPU 34 is finished (see Fig. 2(c)).

A low level output period (period n-p during which the CPU is previously kept in the reset state) for the reset signal with the fixed time interval T is provided in order to secure enough time before the CPU is reset (at time p) after the recovery (time n) from the instantaneous fall of the supply voltage, thereby ensuring complete resetting. If this period is too short, the resetting is incomplete, so that wrong operation of the CPU may possibly be caused. In this manner, resetting of the CPU 34 is completed so that the CPU is restored to its initial state, and the program is returned to the start. While this state is maintained as it is, the operator depresses the start button (at time q) after finishing the check of the power supply for failure, whereupon the restart of the programmed operation is awaited. In the period (p-q) during which the start button is expected to be depressed, the CNC device 3 is connected to the power supply, and the screen is on standby with an initial picture thereon, although the programmed operation, such as cutting, is not restarted yet.

If the instantaneous fall of the supply voltage has been caused and recovered, thereby causing the CPU 34 to be reset automatically, as described above, this is not that the CNC device is cut off from the power supply from the main power source, so that the operation is apparently in an off state such that it is simply suspended. In the case where the operation is suspended from any other cause, an alarm is normally displayed. In the case where the operation is suspended due to the instantaneous fall of the supply voltage, however, no alarm is given. This is because the system has been energized in a correct sequence after the recovery of the instantaneous fall of the supply voltage. In order to discriminate clearly the suspension of the operation due to the instantaneous fall of the supply voltage from the suspension of the operation from any other cause, use of a signal can be proposed so that it is asserted when the main power source is switched on, while it is negated when the automatic operation is started, that is, when the start button is depressed. According to this arrangement, the signal is asserted when the supply voltage is recovered after the operation is suspended due to the instantaneous fall of the supply voltage, and is negated when operation is suspended from any other cause, so that these two cases can be discriminated with ease. This signal may be provided systematically or incorporated in a ladder program.

Furthermore, in restarting the operation after the instantaneous fall of the supply voltage, the operator has to leave his position for depressing each of start buttons for individual CNC devices. Thus, collectively locating these start buttons in one place can save the operator the trouble of going to depress the buttons separately.

In the above description, the instantaneous fall of the supply voltage is regarded solely as an instantaneous voltage drop. According to the present invention, however, the instantaneous fall of the supply voltage is not limited to such an instantaneous voltage drop, but may also be applied to the case where the operation is expected to be suspended because a wrong operation is apprehended due to an instantaneous voltage increase. Thus, if the voltage instantaneously exceeds 5.25 V in the case shown in Fig. 2, for example, the same effect as the instantaneous fall of the supply voltage will result.

According to the embodiment described above, moreover, the instantaneous fall of the supply voltage is detected by means of the instantaneous supply voltage fall monitoring circuit 33 on the basis of the signal voltage delivered from the power circuit 31. Alternatively, however, the instantaneous fall of the supply voltage may be monitored and detected by monitoring the supply voltage applied to the CNC device 3.

## Claims

1. A method for coping with an instantaneous fall of the supply voltage of a CNC device, comprising a step of giving an interrupt command to CPU of the CNC device to stop the operation of the servo system when an instantaneous fall of the supply voltage is detected, and a step of giving a reset signal to said CPU for resetting the CPU when the supply voltage is recovered from the instantaneous fall, thereby causing the state as capable of running a program upon depressing a start button.

2. A method for coping with an instantaneous fall of the supply voltage of a CNC device, comprising a step of giving an interrupt command to CPU of the CNC device to stop the operation of the servo system when an instantaneous fall of the supply voltage is detected, a step of giving a reset signal to said CPU for resetting the CPU when the supply voltage is recovered from the instantaneous fall, thereby causing the state as capable of running a program upon depressing a start button, and also a step of issuing a signal indicative of a standby state for the operation following the recovery of the supply voltage from the instantaneous fall.

3. A method for coping with an instantaneous fall of the supply voltage of a CNC device according to claim 1 or 2, wherein said instantaneous fall of the supply voltage is detected by the output value of a power circuit forming a DC power source used in the CNC device.

4. A method for coping with an instantaneous fall of the supply voltage of a CNC device according to claim 1 or 2, wherein said instantaneous fall of the supply voltage is detected by the supply voltage applied to the CNC device 3.

5. A method for coping with an instantaneous fall of the supply voltage of a CNC device according to claim 1 or 2, wherein said reset signal is a signal with a fixed time interval specifically set for said CPU from the point of time when the supply voltage is recovered from its instantaneous fall.

6. An apparatus for coping with an instantaneous fall of the supply voltage of a CNC device, comprising a power circuit connected to an external power source to form a DC power source used in the CNC device, a monitoring means adapted to monitor the value of an output from said power source to give an interrupt command for stopping a servo system to a CPU of the CNC device when an instantaneous fall of said voltage is detected, and a reset signal generating means for delivering a reset signal with a fixed time interval to said CPU on receiving a signal indicative of the recovery from the instantaneous fall of the output value of said power circuit from said monitoring means, all said means being incorporated in the CNC device.

7. An apparatus for coping with an instantaneous fall of the supply voltage of a CNC device, comprising a power circuit connected to an external power source to form a DC power source used in the CNC device, a monitoring means adapted to monitor the value of an input from said external power source to said power circuit to give an interrupt command for stopping a servo system to a CPU of the CNC device when an instantaneous fall of said voltage is detected, and reset signal generating means for delivering a reset signal with a fixed time interval to said CPU on receiving a signal indicative of the recovery from the instantaneous fall of the output value of said power circuit from said monitoring means, all said means being arranged in the CNC device.

8. An apparatus for coping with an instantaneous fall of the supply voltage of a CNC device according to claim 6 or 7, wherein said reset signal generating means delivers the reset signal to the CPU for a predetermined period of time previously set for said CPU after receiving the signal indicative of the recovery from the instantaneous fall of the output value of the power circuit from said monitoring means.

9. An apparatus for coping with an instantaneous fall of the supply voltage of a CNC device according to any one of claims 6 to 8, wherein said CNC device further incorporates signal generating means for issuing a signal indicative of a standby state for operation based on the recovery from the instantaneous fall of the supply voltage.

10. An apparatus for coping with an instantaneous fall of the supply voltage of a CNC device according to claim 9, wherein said signal generating means issues a signal adapted to be asserted when the external main power source is switched on, and a signal to be negated when a start button is depressed to start automatic operation after recovering from the instantaneous fall of the supply voltage.
